# EUROPÄISCHE PATENTANMELDUNG

(11) **EP 4 421 701 A1**
(43) Veröffentlichungstag der Anmeldung: **28.08.2024**
(21) Anmeldenummer: 24154594.6
(22) Anmeldetag: 30.01.2024
(51) Int. Cl.: G06Q 10/0631, G05B 19/418, G06Q 10/0633, G06Q 10/08

(54) **VORRICHTUNG ZUM STEUERN UND/ODER REGELN EINER VIELZAHL VON MOBILEN FLURFÖRDERZEUGEN UND/ODER INDUSTRIEROBOTERN IN EINEM WARENLAGER**

(30) Priorität: 27.02.2023 DE 102023104685
(71) Anmelder: STILL GmbH, 22113 Hamburg (DE)
(72) Erfinder: BERGMANN, Ansgar, 22941 Bargteheide (DE); RUDALL, Yan, 22453 Hamburg (DE); SCHÜTHE, Dennis, 21255 Tostedt (DE); HINDESMITH, Lukas, 21244 Buchholz (DE); HOWEY, Ansgar, 22926 Ahrensburg (DE); KÖNIG, Ralf, 21365 Adendorf (DE)
(74) Vertreter: Patentship Patentanwaltgesellschaft

(57) **Zusammenfassung**

Die Erfindung betrifft eine Vorrichtung (110), insbesondere eine Datenverarbeitungsvorrichtung (110), zum Steuern und/oder Regeln einer Vielzahl von Flurförderzeugen (120a), Industrierobotern und/oder automatisierten Infrastrukturobjekten (120b) in einem industriellen Umfeld, insbesondere einem Warenlager. Die Datenverarbeitungsvorrichtung (110) umfasst eine Kommunikationsschnittstelle (113), welche ausgebildet ist, eine Vielzahl von Datenströmen zu empfangen, wobei jeder der Vielzahl von Datenströmen in dem industriellen Umfeld, insbesondere in dem Warenlager, erfasste Daten der Vielzahl von Flurförderzeugen (120a), Industrierobotern und/oder automatisierten Infrastrukturobjekten (120b) umfasst. Ferner umfasst die Datenverarbeitungsvorrichtung (110) eine Prozessoreinrichtung (111), welche ausgebildet ist, auf der Grundlage der Vielzahl von Datenströmen und eines Kontextmodells (111a) des industriellen Umfelds, insbesondere des Warenlagers, eine Vielzahl von Signalen zum Steuern und/oder Regeln der Vielzahl von Flurförderzeugen (120a), Industrierobotern und/oder automatisierten Infrastrukturobjekten (120b) zu generieren. Die Kommunikationsschnittstelle (113) ist ferner ausgebildet, die Vielzahl von Signalen an die Vielzahl von Flurförderzeugen (120a), Industrierobotern und/oder automatisierten Infrastrukturobjekten (120b) zu senden, um die Vielzahl von Flurförderzeugen (120a), Industrierobotern und/oder automatisierten Infrastrukturobjekten (120b) zu steuern und/oder zu regeln.

## Beschreibung

Die Erfindung betrifft eine Datenverarbeitungsvorrichtung, ein System und ein Verfahren zum Steuern und/oder Regeln einer Vielzahl von mobilen Flurförderzeugen, Industrierobotern und/oder automatisierten immobilen Infrastrukturobjekten in einem industriellen Umfeld, insbesondere einem Warenlager.

Für den Transport und die Lagerung von Produkten, Waren und Materialien werden oftmals Ladungsträger, beispielsweise Gitterboxen oder Paletten, insbesondere Europaletten, verwendet. Zur Handhabung derartiger Ladungsträger z.B. in der Intralogistik, d.h. dem innerbetrieblichen Materialfluss, z.B. in einem Warenlager, werden in der Regel manuelle, teilweise und/oder voll automatisierte Flurförderzeuge, z.B. Gabelstapler, Industrieroboter und dergleichen eingesetzt, wobei herkömmlicherweise in einem Warenlager oft rein manuell bediente Fahrzeuge eingesetzt werden . Ein Warenlager ist in der Regel ein dynamisches Umfeld, in dem die Steuerung der mobilen Flurförderzeuge in der Regel entweder manuell oder automatisiert erfolgt, wobei die Fahrzeugsteuerungen in sich gekapselt und somit gegenüber höherliegenden Steuerungssystemen abgegrenzt sind. Dies ist zum einen dadurch nachteilig, dass für den automatisierten Bereich sehr viele Schnittstellen, Sensorik und auch manuelle Vorplanung benötigt wird. Zum anderen müssen automatisierte Flurförderzeuge in der Regel aufwendig angelernt werden und reagieren eher statisch auf Störungen im Prozess, was ein aufwendiges Eingreifen des Operators erforderlich machen kann.

Der vorliegenden Erfindung liegt die Aufgabe zugrunde, eine Vorrichtung und ein Verfahren zum Steuern und/oder Regeln einer Vielzahl von mobilen Flurförderzeugen und Industrierobotern und/oder automatisierten Infrastrukturobjekten in einem dynamischen industriellen Umfeld, insbesondere einem Warenlager, bereitzustellen.

Diese Aufgabe wird gemäß einem ersten Aspekt der Erfindung durch eine Datenverarbeitungsvorrichtung zum Steuern und/oder Regeln einer Vielzahl von mobilen Flurförderzeugen und/oder Industrierobotern in einem industriellen Umfeld, insbesondere einem Warenlager, gelöst. Die Datenverarbeitungsvorrichtung umfasst eine Kommunikationsschnittstelle, welche ausgebildet ist, eine Vielzahl von Datenströmen zu empfangen, wobei die Vielzahl von Datenströmen in dem industriellen Umfeld, insbesondere in dem Warenlager, erfasste Daten der Vielzahl von mobilen Flurförderzeugen und/oder Industrierobotern umfasst. Ferner umfasst die Datenverarbeitungsvorrichtung eine Prozessoreinrichtung, welche ausgebildet ist, auf der Grundlage der Vielzahl von Datenströmen und eines Kontextmodells des industriellen Umfelds, insbesondere des Warenlagers, eine Vielzahl von Signalen zum Steuern und/oder Regeln der Vielzahl von mobilen Flurförderzeugen und/oder Industrierobotern sowie des industriellen Umfelds zu generieren. Die Kommunikationsschnittstelle ist ferner ausgebildet, die Vielzahl von Signalen an die Vielzahl von mobilen Flurförderzeugen und/oder Industrierobotern zu senden, um die Vielzahl von mobilen Flurförderzeugen und/oder Industrierobotern zu steuern und/oder zu regeln, insbesondere eine jeweilige Bewegung der Vielzahl von mobilen Flurförderzeugen und/oder Industrierobotern.

Gemäß einer Ausführungsform kann die Vielzahl von Datenströmen ferner in dem industriellen Umfeld, insbesondere in dem Warenlager, erfasste Daten einer Vielzahl von automatisierten immobilen Infrastrukturobjekten umfassen, beispielsweise Daten eines automatisierten Tores in dem Warenlager, Daten einer stationären Ladungsträgerverteilanlage und/oder Daten eines weiteren beliebig komplexen stationären Systemelements. In dieser Ausführungsform ist die Prozessoreinrichtung ferner ausgebildet, auf der Grundlage der Vielzahl von Datenströmen und des Kontextmodells des industriellen Umfelds, insbesondere des Warenlagers, eine Vielzahl von Signalen zum Steuern und/oder Regeln der Vielzahl von automatisierten immobilen Infrastrukturobjekten zu generieren. Die Kommunikationsschnittstelle ist ferner ausgebildet, die Vielzahl von Signalen an die Vielzahl von automatisierten immobilen Infrastrukturobjekten zu senden, um die Vielzahl von automatisierten immobilen Infrastrukturobjekten zu steuern und/oder zu regeln, beispielsweise ein Tor zu öffnen oder zu schließen.

In einer Ausführungsform umfasst das Kontextmodell des industriellen Umfelds einen digitalen Zwilling des industriellen Umfelds, insbesondere des Warenlagers. Dabei ist der digitale Zwilling vorzugsweise funktionsbezogen, d.h. verarbeitet im Wesentlichen nur die Daten aus den Datenströmen, welche die Vorrichtung für die Generierung der Vielzahl von Signalen zum Steuern und/oder Regeln der Vielzahl von mobilen Flurförderzeugen und/oder Industrierobotern verwenden kann. Mit anderen Worten: der digitale Zwilling ist vorteilhaft ausgebildet eine funktionsbezogene Selektion der Daten aus den Datenströmen vorzunehmen.

Gemäß einer Ausführungsform ist das Kontextmodell als ein Machine-Learning-Modell (ML-Modell) ausgebildet. Vorteilhafterweise kann das ML-Modell ausgebildet sein, auf der Grundlage einer Vielzahl von Trainingsdaten trainiert zu werden, beispielsweise indem das ML-Modell eines oder mehrere trainierbare neuronale Netze umfasst.

In einer Ausführungsform ist das ML-Modell vorteilhafterweise ausgebildet, auf der Grundlage der Vielzahl von Datenströmen Bewegungen der Vielzahl von mobilen Flurförderzeugen und Industrierobotern vorherzusagen, und wobei die Prozessoreinrichtung ausgebildet ist, auf der Grundlage der Vielzahl von Datenströmen, des Kontextmodells des industriellen Umfelds, insbesondere des Warenlagers, und den vorhergesagten Bewegungen der Vielzahl von mobilen Flurförderzeugen und Industrierobotern, die Vielzahl von Signalen zum Steuern und/oder Regeln der Vielzahl von mobilen Flurförderzeugen und Industrierobotern sowie der Vielzahl von automatisierten immobilen Infrastrukturobjekten zu generieren.

Gemäß einer Ausführungsform umfasst die Vielzahl von Datenströmen einen ersten Datenstrom, welcher Zustandsdaten, insbesondere Positionsdaten, und/oder Bewegungsdaten von wenigstens einem der Vielzahl von mobilen Flurförderzeuge und Industrierobotern umfasst.

In einer Ausführungsform umfasst die Vielzahl von Datenströmen einen zweiten Datenstrom, wobei der zweite Datenstrom, in der industriellen Umgebung erfasste Bildsensordaten und/oder Daten umfasst, welche auf in dem industriellen Umfeld erfassten Bildsensordaten basieren. Vorteilhafterweise kann somit eine Vorverarbeitung der Daten der Vielzahl von Datenströmen erfolgen, die von einer Vielzahl von Sensoren in dem industriellen Umfeld erfasst werden, um die Menge der von der Datenverarbeitungsvorrichtungen empfangenen Daten zu reduzieren. Dabei können die Sensoren auch jeweils ein Teil eines der mobilen Flurförderzeuge oder Industrieroboter sein. Beispielsweise kann ein bildgebender Sensor, insbesondere eine Kamera, Bilddaten des industriellen Umfelds erfassen, in diesen Bilddaten Objekte in dem industriellen Umfeld erkennen und statt der vollständigen Bilddaten lediglich Positionsdaten der in den Bilddaten erkannten Objekte als ein Datenstrom der Vielzahl von Datenströmen an die Datenverarbeitungsvorrichtung übertragen.

Gemäß einer Ausführungsform kann die Datenverarbeitungsvorrichtung als ein Cloud-Server, insbesondere ein Edge-Cloud-Server, ausgebildet sein. Dabei kann der Cloud-Server ausgebildet sein, in einer Vielzahl von industriellen Umfeldern, insbesondere Warenlagern, eine jeweilige Vielzahl von mobilen Flurförderzeugen und Industrierobotern zu steuern und/oder zu regeln. Vorteilhafterweise kann bei dieser Ausführungsform die Datenverarbeitungsvorrichtung zumindest Teile eines Kontextmodells für ein erstes Warenlager für ein Kontextmodell für ein zweites Warenlager verwenden.

In einer Ausführungsform ist die Kommunikationsschnittstelle ausgebildet, drahtlos und/oder drahtgebunden die Vielzahl von Datenströmen zu empfangen und/oder die Vielzahl von Signalen an die Vielzahl von mobilen Flurförderzeugen und/oder Industrierobotern sowie die Vielzahl von automatisierten immobilen Infrastrukturobjekten zu senden. Beispielsweise kann die Kommunikationsschnittstelle der Datenverarbeitungsvorrichtung ausgebildet sein über ein Kommunikationsnetzwerk, insbesondere ein WLAN und/oder das Internet die Vielzahl von Datenströme empfangen.

Gemäß einem zweiten Aspekt der Erfindung wird ein mobiles Flurförderzeug oder ein mobiler Industrieroboter bereitgestellt, wobei die Datenverarbeitungsvorrichtung gemäß dem ersten Aspekt Teil des mobilen Flurförderzeug oder des mobilen Industrieroboters ist.

Gemäß einem dritten Aspekt der Erfindung wird ein System bereitgestellt, welches eine Datenverarbeitungsvorrichtung gemäß dem ersten Aspekt der Erfindung sowie eine Vielzahl von mobilen Flurförderzeugen und/oder Industrierobotern umfasst. Das System gemäß dem dritten Aspekt umfasst ferner eine Vielzahl von Sensoren, welche ausgebildet sind, die Daten der Vielzahl von mobilen Flurförderzeugen und/oder Industrierobotern in dem industriellen Umfeld, insbesondere in dem Warenlager, zu erfassen und als einen jeweiligen Datenstrom an die Datenverarbeitungsvorrichtung zu übertragen.

In einer Ausführungsform umfasst die Vielzahl von Sensoren eine Vielzahl von bildgebenden Sensoren, insbesondere Kameras, die in dem industriellen Umfeld, insbesondere dem Warenlager, und/oder an der Vielzahl von mobilen Flurförderzeugen und/oder Industrierobotern angebracht sind. Insbesondere durch die Anbringung der Sensoren an mobile Systeme, kann auf eine flächendeckende Ausbringung von Sensoren im industriellen Umfeld verzichtet werden, da diese mobilen Systeme die Daten inkrementell zur Verfügung stellen können und somit den Installationsaufwand drastisch reduzieren.

Gemäß einem vierten Aspekt der Erfindung wird ein Verfahren zum Steuern und/oder Regeln einer Vielzahl von mobilen Flurförderzeugen und/oder Industrierobotern in einem industriellen Umfeld, insbesondere einem Warenlager, bereitgestellt. Das Verfahren gemäß dem vierten Aspekt der Erfindung umfasst die folgenden Schritte: Empfangen einer Vielzahl von Datenströmen, wobei jeder der Vielzahl von Datenströmen in dem industriellen Umfeld, insbesondere in dem Warenlager, erfasste Daten der Vielzahl von mobilen Flurförderzeugen und/oder Industrierobotern umfasst; Generieren einer Vielzahl von Signalen zum Steuern und/oder Regeln der Vielzahl von mobilen Flurförderzeugen und/oder Industrierobotern auf der Grundlage der Vielzahl von Datenströmen und eines Kontextmodells des industriellen Umfelds, insbesondere des Warenlagers; und
Senden der Vielzahl von Signalen an die Vielzahl von mobilen Flurförderzeugen und/oder Industrierobotern, um die Vielzahl von Flurförderzeugen und/oder Industrierobotern zu steuern und/oder zu regeln. Die Mechanismen gelten ebenfalls wie beschrieben für alle erwähnten Infrastruktur-Elemente, die angesteuert werden können. Teile der erforderlichen Datenströme können auch durch ein angeschlossenes Warenmanagementsystem generiert werden, um einen Anschluss an entsprechende Warenfluss und Produktionsabläufe zu garantieren.

Das Verfahren gemäß dem vierten Aspekt der Erfindung kann mittels der Datenverarbeitungsvorrichtung gemäß dem ersten Aspekt der Erfindung durchgeführt werden. Daher ergeben sich weitere mögliche Ausführungsformen des Verfahrens gemäß dem vierten Aspekt der Erfindung aus den vorstehend und nachstehend beschriebenen weiteren Ausführungsformen der Datenverarbeitungsvorrichtung gemäß dem ersten Aspekt der Erfindung.

Weitere Vorteile und Einzelheiten der Erfindung werden beispielhaft anhand der in den schematischen Figuren dargestellten Ausführungsbeispielen näher erläutert. Hierbei zeigt:
Figur 1 eine schematische Darstellung eines erfindungsgemäßen Systems mit einer erfindungsgemäßen Datenverarbeitungsvorrichtung zum Steuern und/oder Regeln einer Vielzahl von mobilen Flurförderzeugen und/oder Industrierobotern in einem Warenlager;
Figur 2 eine schematische Darstellung eines von der Datenverarbeitungsvorrichtung von Figur 1 implementierten Kontextmodells des Warenlagers zum Steuern und/oder Regeln der Vielzahl von mobilen Flurförderzeugen und/oder Industrierobotern in dem Warenlager; und
Figur 3 ein Flussdiagramm, welches Schritte eines Verfahrens zum Steuern und/oder Regel einer Vielzahl von mobilen Flurförderzeugen und/oder Industrierobotern in einem Warenlager gemäß einer Ausführungsform illustriert.

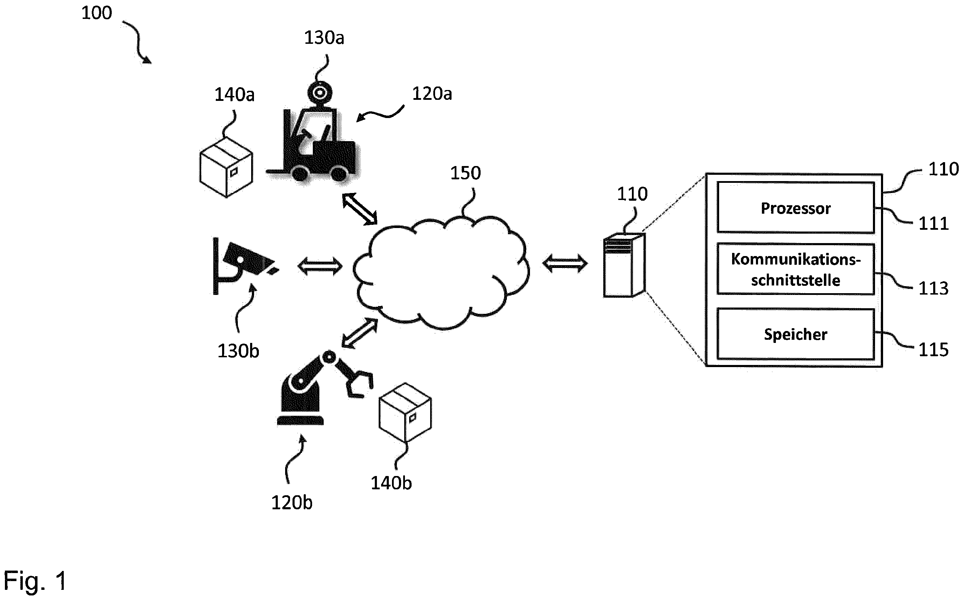

Figur 1 zeigt eine schematische Darstellung eines erfindungsgemäßen Systems 100 mit einer erfindungsgemäßen Datenverarbeitungsvorrichtung 110 zum Steuern einer Vielzahl von mobilen Flurförderzeugen, beispielsweise einem Gabelstapler 120a und/oder Industrierobotern, beispielsweise einem Picker in einem industriellen Umfeld, insbesondere in einem Warenlager, mit einer Vielzahl von Warenobjekten und/oder Ladungsträgern 140a,b. In einer Ausführungsform kann die

Datenverarbeitungsvorrichtung 110 ferner zum Steuern einer Vielzahl von automatisierten immobilen Infrastrukturobjekten 120b, beispielsweise einem automatisierten Tor in dem Warenlager ausgebildet sein. Bei der in Figur 1 dargestellten Datenverarbeitungsvorrichtung 110 kann es sich beispielsweise um einen Industrie-PC 110 oder einen Cloud-Server, insbesondere einen Edge-Cloud-Server 110, handeln. In einer weiteren Ausführungsform kann die Datenverarbeitungsvorrichtung 110 als Teil eines der mobilen Flurförderzeuge 120a und/oder Industrieroboter ausgebildet sein.

Wie in Figur 1 dargestellt, umfasst das System 100 ferner eine Vielzahl von Sensoren 130a,b, welche ausgebildet sind, Daten der Vielzahl von mobilen Flurförderzeugen 120a und/oder Industrierobotern, der automatisierten immobilen Infrastrukturobjekte 120b und/oder der Ladungsträger 140a,b in dem industriellen Umfeld, insbesondere in dem Warenlager, zu erfassen und als einen jeweiligen Datenstrom an die Datenverarbeitungsvorrichtung 110 zu übertragen. Die Vielzahl von Sensoren können eine Vielzahl von bildgebenden Sensoren, insbesondere Kameras 130a,b, umfassen, die in dem industriellen Umfeld, insbesondere dem Warenlager, und/oder an der Vielzahl von mobilen Flurförderzeugen 120a und/oder Industrierobotern angebracht sind.

In einer Ausführungsform ist die Kommunikationsschnittstelle 113 der Datenverarbeitungsvorrichtung 110 ausgebildet, drahtlos und/oder drahtgebunden die Vielzahl von Datenströmen von den Sensoren 130a,b zu empfangen und/oder mit den mobilen Flurförderzeugen 120a und/oder Industrierobotern sowie den automatisierten immobilen Infrastrukturobjekten 120b zu kommunizieren. Beispielsweise kann die Kommunikationsschnittstelle 113 der Datenverarbeitungsvorrichtung 110 ausgebildet sein, über ein Kommunikationsnetzwerk (z.B. WLAN, 4/5G, etc.) und/oder das Internet 150 die Vielzahl von Datenströme von den Sensoren 130a,b zu empfangen und/oder mit den mobilen Flurförderzeugen 120a und Industrierobotern zu kommunizieren.

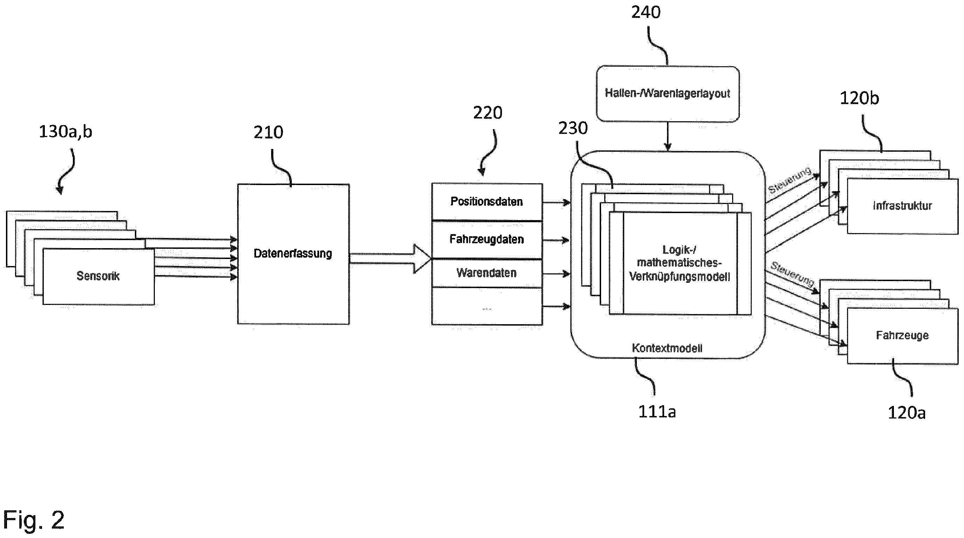

Wie dies nachstehend unter weiterer Bezugnahme auf Figur 2 im Detail beschrieben wird, umfasst die Datenverarbeitungsvorrichtung 110 eine Prozessoreinrichtung 111, welche ausgebildet ist, auf der Grundlage der Vielzahl von Datenströmen der von den Sensoren 130a,b in einer Datenerfassung 210 erfassten Daten und eines Kontextmodells 111a des industriellen Umfelds, insbesondere des Warenlagers, eine Vielzahl von Signalen zum Steuern und/oder Regeln der Vielzahl von mobilen Flurförderzeugen 120a und Industrierobotern zu generieren.

Die Datenverarbeitungsvorrichtung 110 kann ferner einen nichtflüchtigen Speicher 115 umfassen. Der nichtflüchtige Speicher 115 kann ausgebildet sein, Daten und ausführbaren Programmcode zu speichern, der, wenn von der Prozessoreinrichtung 111 der Datenverarbeitungsvorrichtung 110 ausgeführt, die Prozessoreinrichtung 111 veranlasst, die im Folgenden beschriebenen Funktionen, Operationen und Verfahren durchzuführen.

Wie in Figur 2 dargestellt, können die von den Sensoren 130a,b erfassten und/oder bereits weiter verarbeiteten Daten 220 beispielsweise Positionsdaten, Fahrzeugdaten und Warendaten umfassen. In einer Ausführungsform können die Flurförderzeuge 120a, die Industrieroboter und/oder die automatisierten Infrastrukturobjekte 120b über die Vielzahl von Sensoren 130a,b neben geometrischen Daten, wie Fahrzeugdimensionen, Lagergröße, Gangbreiten und dergleichen, hochfrequent (beispielsweise mindestens alle 20 ms) die aktuellen Statusinformationen, wie aktuelle Position, Geschwindigkeit, Posenvektor, Ladungs-, Lager- und Betriebszustand zur Verfügung, um ein Echtzeitabbild der Situation zu ermöglichen.

Die Kommunikationsschnittstelle 113 der Datenverarbeitungsvorrichtung 110 ist ferner ausgebildet, die Vielzahl von Signalen an die Vielzahl von mobilen Flurförderzeugen 120a und Industrieroboter zu senden, um die Vielzahl von mobilen Flurförderzeugen 120a und Industrieroboter zu steuern und/oder zu regeln, insbesondere eine jeweilige Bewegung der Vielzahl von mobilen Flurförderzeugen 120a und Industrierobotern zu steuern. Gemäß einer Ausführungsform kann die Vielzahl von Datenströmen ferner in dem industriellen Umfeld, insbesondere in dem Warenlager, erfasste Daten der Vielzahl von automatisierten immobilen Infrastrukturobjekten 120b umfassen, beispielsweise Daten eines automatisierten Tores in dem Warenlager.

Gemäß einer Ausführungsform ist das Kontextmodell 111a als ein Machine-Learning-Modell (ML-Modell) 111a ausgebildet. Vorteilhafterweise kann das ML-Modell 111a ausgebildet sein, auf der Grundlage einer Vielzahl von Trainingsdaten trainiert zu werden, beispielsweise indem das ML-Modell 111a eines oder mehrere trainierbare neuronale Netze umfasst. Die hierfür verwendeten Trainingsdaten können auf in anderen Warenlagern erfassten Daten oder simulierten Daten basieren. Die Trainingsdaten sollten insbesondere so gewählt sein, dass das trainierte Kontextmodell 111a erkennen lernt, wann ein Steuer- und oder Regeleingriff erforderlich ist. Hierzu können die Trainingsdaten aufgezeichnete Daten und die daraus resultierende Aktionen umfassen. In einer weiteren Ausführungsform kann das Kontextmodell 111a mittels eines Reinforcement-Ansatzes trainiert werden. Hierzu können mit einer Simulation zufällig Szenarien in einem Warenlager generiert und deren Ablauf simuliert werden. Mit dem Reinforcement-Ansatz führt das Kontextmodell 111a Aktionen auf der Grundlage dieser simulierten Daten aus und erhält einen positiven Reward, wenn die Aktion zu einem gewünschten Ergebnis führt, bzw. einen negativen Reward, wenn die Aktion zu einem unerwünschten Ergebnis führt, z.B. zu einer Kollision von Objekten in dem Warenlager.

Wie in Figur 2 dargestellt, kann das Kontextmodell 111a eines oder mehrere logische und/oder mathematische Verknüpfungsmodelle 230 umfassen, welche ausgebildet sind, die in den unterschiedlichen Datenströmen enthaltenen Daten 220 miteinander zu verknüpfen. Die logischen und/oder mathematischen Verknüpfungsmodelle 230 können auf logischen und/oder mathematischen Operation beruhen, wie beispielsweise der Booleschen Algebra, und Verknüpfungsregeln definieren. Beispielsweise können die logischen und/oder mathematischen Verknüpfungsmodelle 230 des Kontextmodells 111a definieren, dass, falls die Daten 220 eines ersten Sensors 130a und die Daten eines zweiten Sensors 130b jeweils eine Bedingung erfüllen ("wahr"), ein Flurförderzeug 120a nicht einen vordefinierten Weg nehmen kann, so dass die Datenverarbeitungsvorrichtung 110 das Flurförderzeug 120a entsprechend steuert, beispielsweise abbremst. Beispielweise kann der erste Sensor 130a eine Ladung mit einer Höhe von 1 Meter auf dem Gabelträger des Flurförderzeugs 120a detektieren und der zweite Sensor 130b kann detektieren, dass sich der Gabelträger des Flurförderzeugs 120a bei einer Höhe von 2,5 Metern befindet und sich das Flurförderzeug 120a auf ein Tor zu bewegt, welches eine Höhe von 3 Metern aufweist. In diesem Fall kann die Datenverarbeitungsvorrichtung 110 das Flurförderzeug 120a entsprechend ansteuern, beispielsweise abbremsen.

In einer Ausführungsform umfasst das Kontextmodell 111a des industriellen Umfelds, insbesondere des Warenlagers, einen digitalen Zwilling des industriellen Umfelds, insbesondere des Warenlagers. Dabei ist der digitale Zwilling vorzugsweise funktionsbezogen, d.h. verarbeitet im Wesentlichen nur die Daten aus den Datenströmen von den Sensoren 130a,b, welche die Datenverarbeitungsvorrichtung 110 für die Generierung der Vielzahl von Signalen zum Steuern und/oder Regeln der Vielzahl von mobilen Flurförderzeugen 120a und/oder Industrierobotern verwenden kann. Mit anderen Worten: der digitale Zwilling ist vorteilhaft ausgebildet eine funktionsbezogene Selektion der Daten aus den Datenströmen von den Sensoren 130a,b vorzunehmen.

In einer Ausführungsform können dem digitalen Zwilling beispielsweise die folgenden Daten als Input vorliegen: Belegung der Gänge der Lagerbereiche mit Fahrzeugen; Bewegungsrichtung und Geschwindigkeit aller Fahrzeuge; Vorhandensein und Lage von vermeintlichen Hindernissen; Lage, Art und Beschaffenheit der Ladungsträger und Ladung; Vorhandensein von Personen im Lagerbereich; Einsatzfähigkeit (Ladungszustand, Störungen) der eingesetzten Fahrzeuge; und/oder eventuelle Schäden an der lagertechnischen Infrastruktur.

In einer Ausführungsform ist das Kontextmodell 111a mit dem digitalen Zwilling vorteilhafterweise ausgebildet, auf der Grundlage der Vielzahl von Datenströmen Bewegungen der Vielzahl von mobilen Flurförderzeugen 120a und Industrierobotern vorherzusagen. Hierzu kann das ML-Modell 111a, insbesondere das Kontextmodell 111a, mit dem digitalen Zwilling auf eine Karte 240 bzw. Layout des Warenlagers zurückgreifen. Bei dieser Ausführungsform ist die Prozessoreinrichtung 111 der Datenverarbeitungsvorrichtung 110 ausgebildet, auf der Grundlage der Vielzahl von Datenströmen, des Kontextmodells 111a des industriellen Umfelds, insbesondere des Warenlagers, und den vorhergesagten Bewegungen der Vielzahl von mobilen Flurförderzeugen 120a und Industrierobotern, die Vielzahl von Signalen zum Steuern und/oder Regeln der Vielzahl von mobilen Flurförderzeugen 120a und Industrierobotern sowie der Vielzahl von automatisierten immobilen Infrastrukturobjekten 120b zu generieren.

Gemäß einer Ausführungsform umfasst die Vielzahl von Datenströmen einen ersten Datenstrom, welcher Zustandsdaten 220, insbesondere Positionsdaten, und/oder Bewegungsdaten von wenigstens einem der Vielzahl von mobilen Flurförderzeuge 120a und Industrierobotern umfasst. In einer Ausführungsform umfasst die Vielzahl von Datenströmen einen zweiten Datenstrom, wobei der zweite Datenstrom, in dem industriellen Umfeld erfasste Bildsensordaten und/oder Daten umfasst, welche auf in dem industriellen Umfeld erfassten Bildsensordaten basieren. Vorteilhafterweise kann somit eine Vorverarbeitung der Daten der Vielzahl von Datenströmen erfolgen, die von der Vielzahl von Sensoren 130a,b in dem industriellen Umfeld erfasst werden, um die Menge der von der Datenverarbeitungsvorrichtung 110 empfangenen Daten zu reduzieren. Beispielsweise kann ein bildgebender Sensor, insbesondere eine Kamera 130a,b, Bilddaten des industriellen Umfelds erfassen, in diesen Bilddaten Objekte in dem industriellen Umfeld erkennen und statt der vollständigen Bilddaten lediglich Positionsdaten der in den Bilddaten erkannten Objekte als ein Datenstrom der Vielzahl von Datenströmen an die Datenverarbeitungsvorrichtung 110 übertragen.

Wie der Fachmann erkennt, lassen sich durch die erfindungsgemäße Datenverarbeitungsvorrichtung 110 aufgrund der vorstehend beschriebenen von den Sensoren 130a,b bereitgestellten Inputdaten 220 Prozesse in einem Warenlager optimal steuern, da zum Beispiel eine Überbelegung von Gängen vermieden werden kann und alternative Fahrwege ermittelt werden können. Auch fehlerhaft verpackte Ladung wird aufgrund der Steuerung und/oder Regelung durch die erfindungsgemäße Datenverarbeitungsvorrichtung 110 erst gar nicht transportiert, sodass keine Anteile während des Transports auf den Boden fallen können und den Ablauf stören. Energetisch leere Fahrzeuge übernehmen aufgrund der Steuerung und/oder Regelung durch die erfindungsgemäße Datenverarbeitungsvorrichtung 110 keine Transportaufgabe, bei denen diese aus Energiemangel liegen bleiben könnten. Fahrzeuge verhalten sich aufgrund der Steuerung und/oder Regelung durch die erfindungsgemäße Datenverarbeitungsvorrichtung 110 dem Personenaufkommen in einem Bereich angemessen, so dass weder der Transportauftrag beeinflusst noch die Personen gefährdet werden. Beschädigungen an Lagereinrichtungen werden zeitnah gemeldet, so dass das Gefährdungspotential durch Strukturbrüche an Lagereinrichtungen reduziert werden kann. Da alle Erkenntnisse in der Cloud verarbeitet werden können und somit als Information vorliegen, lassen sich Prozessparameter für einen optimalen Ablauf bei den Lagerbewegungen frei skalieren, ohne dass die Infrastruktur angepasst werden muss.

In einer Ausführungsform kann die Prozessoreinrichtung 111 der Datenverarbeitungsvorrichtung 110 ferner für ein sogenanntes "Smart Sensoring" ausgebildet sind, d.h. virtuelle Sensoren können durch mathematische Verknüpfungen realisiert werden und müssen nicht physikalisch existieren, was zu Kosteneinsparungen führen kann. So kann z.B. ein Vergleich von Fahrzeugbreite und Gangbreite verhindern, das ein zu breites Fahrzeug einfährt und somit Beschädigungen und Prozessstörungen nach sich zieht.

Mit dem vorstehend beschriebenen erfindungsgemäßen System 100 mit der Datenverarbeitungsvorrichtung 110 können beliebig komplizierte Überprüfungen von Systemzuständen und Abläufen einfach datentechnisch realisiert werden. Ob Abläufe zu Komplikationen oder gar zu Unfällen oder Beschädigung an Waren oder Systemen führen, kann sowohl in der Simulation als auch im Echtzeitbetrieb berechnet werden. Eine Torbeschädigung durch einen zu hohen Gabelstapler kann zum Beispiel allein mit den Informationen Bauhöhe des Staplers und seine Position sowie der Durchfahrtshöhe und des Standortes des Tores vermieden werden.

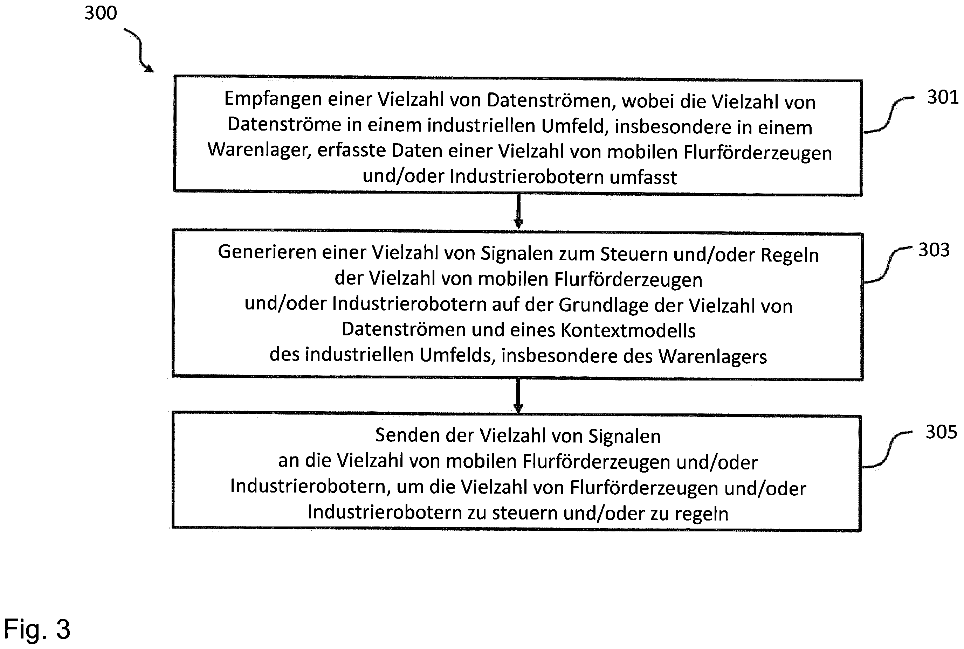

Figur 3 zeigt ein Flussdiagramm, welches Schritte eines Verfahrens 300 zum Steuern und/oder Regeln der Vielzahl von mobilen Flurförderzeugen 120a und Industrierobotern in einem industriellen Umfeld, insbesondere einem Warenlager, zeigt. Das Verfahren 300 umfasst einen Schritt 301 des Empfangens einer Vielzahl von Datenströmen, wobei die Vielzahl von Datenströme in dem industriellen Umfeld, insbesondere in dem Warenlager, erfasste Daten 220 der Vielzahl von mobilen Flurförderzeugen 120a und/oder Industrierobotern umfasst. Ferner umfasst das Verfahren 300 einen Schritt 303 des Generierens einer Vielzahl von Signalen zum Steuern und/oder Regeln der Vielzahl von mobilen Flurförderzeugen und/oder Industrierobotern auf der Grundlage der Vielzahl von Datenströmen und des Kontextmodells 111a des industriellen Umfelds, insbesondere des Warenlagers. Das Verfahren 300 umfasst ferner einen Schritt 305 des Sendens der Vielzahl von Signalen an die Vielzahl von mobilen Flurförderzeugen 120a und/oder Industrierobotern, um die Vielzahl von mobilen Flurförderzeugen 120a und/oder Industrierobotern zu steuern und/oder zu regeln.

Das Verfahren 300 kann mittels der vorstehend im Detail beschriebenen Datenverarbeitungsvorrichtung 110 durchgeführt werden. Daher ergeben sich weitere mögliche Ausführungsformen des Verfahrens 300 aus den vorstehend und nachstehend beschriebenen weiteren Ausführungsformen der Datenverarbeitungsvorrichtung 110.

## Patentansprüche

1. Datenverarbeitungsvorrichtung (110) zum Steuern und/oder Regeln einer Vielzahl von mobilen Flurförderzeugen (120a) und/oder Industrierobotern in einem industriellen Umfeld, insbesondere einem Warenlager, wobei die Datenverarbeitungsvorrichtung (110) umfasst:
eine Kommunikationsschnittstelle (113), welche ausgebildet ist, eine Vielzahl von Datenströmen zu empfangen, wobei die Vielzahl von Datenströmen in dem industriellen Umfeld, insbesondere in dem Warenlager, erfasste Daten der Vielzahl von Flurförderzeugen (120a) und/oder Industrierobotern umfasst;
eine Prozessoreinrichtung (111), welche ausgebildet ist, auf der Grundlage der Vielzahl von Datenströmen und eines Kontextmodells (111a) des industriellen Umfelds, insbesondere des Warenlagers, eine Vielzahl von Signalen zum Steuern und/oder Regeln der Vielzahl von mobilen Flurförderzeugen (120a) und/oder Industrierobotern zu generieren;
wobei die Kommunikationsschnittstelle (113) ferner ausgebildet ist, die Vielzahl von Signalen an die Vielzahl von mobilen Flurförderzeugen (120a) und/oder Industrierobotern zu senden, um die Vielzahl von mobilen Flurförderzeugen (120a) und/oder Industrierobotern zu steuern und/oder zu regeln.

2. Datenverarbeitungsvorrichtung (110) nach Anspruch 1, wobei die Vielzahl der von der Kommunikationsschnittstelle (113) empfangenen Datenströme ferner in dem industriellen Umfeld, insbesondere in dem Warenlager, erfasste Daten einer Vielzahl von automatisierten immobilen Infrastrukturobjekten (120b) umfasst, wobei die Prozessoreinrichtung (111) ferner ausgebildet ist, auf der Grundlage der Vielzahl von Datenströmen und des Kontextmodells (111a) des industriellen Umfelds, insbesondere des Warenlagers, eine Vielzahl von Signalen zum Steuern und/oder Regeln der Vielzahl von automatisierten immobilen Infrastrukturobjekten (120b) zu generieren, und wobei die Kommunikationsschnittstelle (113) ferner ausgebildet ist, die Vielzahl von Signalen an die Vielzahl von automatisierten immobilen Infrastrukturobjekten (120b) zu senden, um die Vielzahl von automatisierten immobilen Infrastrukturobjekten (120b) zu steuern und/oder zu regeln.

3. Datenverarbeitungsvorrichtung (110) nach Anspruch 1 oder 2, wobei das Kontextmodell (111a) des industriellen Umfelds einen digitalen Zwilling des industriellen Umfelds, insbesondere des Warenlagers, umfasst.

4. Datenverarbeitungsvorrichtung (110) nach einem der vorstehenden Ansprüche, wobei das Kontextmodell (111a) als ein Machine-Learning-Modell, ML-Modell, (111a) ausgebildet ist.

5. Datenverarbeitungsvorrichtung (110) nach Anspruch 4, wobei das ML-Modell (111a) ausgebildet ist, auf der Grundlage der Vielzahl von Datenströmen Bewegungen der Vielzahl von mobilen Flurförderzeugen (120a) und/oder Industrierobotern vorherzusagen, und wobei die Prozessoreinrichtung (111) ausgebildet ist, auf der Grundlage der Vielzahl von Datenströmen, des Kontextmodells (111a) des industriellen Umfelds, insbesondere des Warenlagers, und den vorhergesagten Bewegungen der Vielzahl von mobilen Flurförderzeugen (120a) und/oder Industrierobotern, die Vielzahl von Signalen zum Steuern und/oder Regeln der Vielzahl von mobilen Flurförderzeugen (120a) und/oder Industrierobotern zu generieren.

6. Datenverarbeitungsvorrichtung (110) nach Anspruch 4 oder 5, wobei das ML-Modell (111a) ausgebildet ist, auf der Grundlage einer Vielzahl von Trainingsdaten trainiert zu werden.

7. Datenverarbeitungsvorrichtung (110) nach einem der vorhergehenden Ansprüche, wobei die Vielzahl von Datenströmen einen ersten Datenstrom umfasst, wobei der erste Datenstrom, Zustandsdaten, insbesondere Positionsdaten, und/oder Bewegungsdaten von wenigstens einem der Vielzahl von mobilen Flurförderzeugen (120a) und/oder Industrierobotern umfasst.

8. Datenverarbeitungsvorrichtung (110) nach einem der vorhergehenden Ansprüche, wobei die Vielzahl von Datenströmen einen zweiten Datenstrom umfasst, wobei der zweite Datenstrom, in dem industriellen Umfeld erfasste Bildsensordaten und/oder Daten umfasst, welche auf in dem industriellen Umfeld erfassten Bildsensordaten basieren.

9. Datenverarbeitungsvorrichtung (110) nach einem der vorhergehenden Ansprüche, wobei die Datenverarbeitungsvorrichtung (110) ein Cloud-Server (110), insbesondere ein Edge-Cloud-Server, (110) ist, welcher ausgebildet ist, eine Vielzahl von Flurförderzeugen (120a) und/oder Industrierobotern in einer Vielzahl von industriellen Umfeldern zu steuern und/oder zu regeln.

10. Datenverarbeitungsvorrichtung (110) nach einem der vorhergehenden Ansprüche, wobei die Kommunikationsschnittstelle (113) ausgebildet ist, drahtlos und/oder drahtgebunden die Vielzahl von Datenströme zu empfangen und/oder die Vielzahl von Signalen an die Vielzahl von mobilen Flurförderzeugen (120a) und/oder Industrierobotern zu senden.

11. Flurförderzeug (120a) und/oder Industrieroboter mit einer Datenverarbeitungsvorrichtung (110) nach einem der Ansprüche 1 bis 10.

12. System (100), umfassend:
eine Datenverarbeitungsvorrichtung (110) nach einem der Ansprüche 1 bis 10;
eine Vielzahl von mobilen Flurförderzeugen (120a) und/oder Industrierobotern; und
eine Vielzahl von Sensoren (130a,b), welche ausgebildet sind, die Daten der Vielzahl von mobilen Flurförderzeugen (120a) und/oder Industrierobotern in dem industriellen Umfeld, insbesondere in dem Warenlager, zu erfassen und als einen jeweiligen Datenstrom an die Datenverarbeitungsvorrichtung (110) zu übertragen.

13. System (100) nach Anspruch 12, wobei die Vielzahl von Sensoren (130a,b) eine Vielzahl von bildgebenden Sensoren (130a,b), insbesondere Kameras (130a,b), umfassen, die in dem industriellen Umfeld, insbesondere dem Warenlager, und/oder an der Vielzahl von mobilen Flurförderzeugen (120a) und/oder Industrierobotern angebracht sind.

14. Verfahren (300) zum Steuern und/oder Regeln einer Vielzahl von mobilen Flurförderzeugen (120a) und Industrierobotern in einem industriellen Umfeld, insbesondere einem Warenlager, wobei das Verfahren (300) umfasst:
Empfangen (301) einer Vielzahl von Datenströmen, wobei die Vielzahl von Datenströmen in dem industriellen Umfeld, insbesondere in dem Warenlager, erfasste Daten der Vielzahl von mobilen Flurförderzeugen (120a) und/oder Industrierobotern umfasst;
Generieren (303) einer Vielzahl von Signalen zum Steuern und/oder Regeln der Vielzahl von mobilen Flurförderzeugen (120a) und/oder Industrierobotern auf der Grundlage der Vielzahl von Datenströmen und eines Kontextmodells (111a) des industriellen Umfelds, insbesondere des Warenlagers; und
Senden (305) der Vielzahl von Signalen an die Vielzahl von mobilen Flurförderzeugen (120a) und/oder Industrierobotern, um die Vielzahl von mobilen Flurförderzeugen (120a) und/oder Industrierobotern zu steuern und/oder zu regeln.
